# EUROPÄISCHE PATENTSCHRIFT

(11) **EP 2 024 134 B1**
(45) Veröffentlichungstag und Bekanntmachung des Hinweises auf die Patenterteilung: **07.04.2010**
(21) Anmeldenummer: 07711531.9
(22) Anmeldetag: 14.02.2007
(51) Int. Cl.: B23P 21/00, B25J 5/02, B25J 9/00, B62D 65/02

(54) **BEARBEITUNGSSYSTEM FÜR EIN BEWEGTES WERKSTÜCK UND VERFAHREN ZUM POSITIONIEREN DES BEARBEITUNGSSYSTEMS**
PROCESSING SYSTEM FOR A MOVING WORKPIECE AND METHOD OF POSITIONING THE PROCESSING SYSTEM
SYSTÈME D'USINAGE POUR UNE PIÈCE À USINER ET PROCÉDÉ DE POSITIONNEMENT DU SYSTÈME D'USINAGE

(30) Priorität: 03.06.2006 DE 102006026132
(43) Veröffentlichungstag der Anmeldung: 18.02.2009
(73) Patentinhaber: Daimler AG, 70327 Stuttgart (DE)
(72) Erfinder: HABISREITINGER, Uwe, 72290 Lossburg (DE)
(74) Vertreter: JENSEN & SON
(86) Internationale Anmeldenummer: PCT/EP2007/001263
(87) Internationale Veröffentlichungsnummer: WO 2007/140828

(56) Entgegenhaltungen:
- EP-A1- 0 348 604
- DE-B3- 10 313 463
- US-A- 3 283 918
- US-A- 4 589 184

## Beschreibung

Die Erfindung betrifft ein Bearbeitungssystem zum Bearbeiten eines bewegten Werkstücks mittels eines zeitweise starr an das Werkstück und/oder an eine bewegte Werkstückträgereinheit koppelbaren Industrieroboters, wobei der Industrieroboter in entkoppelter Betriebsstellung von einer Trägereinrichtung getragen wird, die mittels eine antriebsaktiv wirkenden Antriebseinheit werkstückunabhängig bewegbar ist, und in gekoppelter Betriebsstellung mittels eines schwimmenden Lagerungssystem relativ zur Trägereinrichtung schwimmend gelagert ist, gemäß dem Oberbegriff des Anspruchs 1.

Ferner bezieht sich die Erfindung auf ein Verfahren zum Positionieren eines zeitweise starr an ein bewegbares Werkstück und/oder an eine bewegbare Werkstückträgereinheit ankoppelbaren Industrieroboters eines Bearbeitungssystems der eingangs genannten Art, wobei das Bearbeitungssystem eine werkstückunabhängig mittels einer Antriebseinheit bewegbare Trägereinrichtung aufweist, welche den Industrieroboter im entkoppelten Betriebszustand trägt, gemäß dem Oberbegriff des Anspruchs 16.

Bearbeitungssysteme und Verfahren der eingangs genannten Art sind bekannt. Beispielsweise offenbart die DE 103 13 463 B3 ein Verfahren und eine Vorrichtung zum Durchführen einer Arbeitsoperation an einem bewegten Werkstück durch einen synchron mitbewegten Industrieroboter. Der mitbewegte Industrieroboter wird während der gesamten Arbeitsphase, dass heißt in einem an das Werkstück gekoppelten Zustand, im Mittel mit der Geschwindigkeit der das Werkstück bewegenden Fördereinrichtung voranbewegt. Hierzu wird die an der Fördereinrichtung gemessene Fördergeschwindigkeit als Sollgeschwindigkeit einem Geschwindigkeitsregler vorgegeben und dem Antrieb eines Fahrschemels des Industrieroboters aufgeprägt.

Es ist Aufgabe der Erfindung, ein alternatives Bearbeitungssystem der eingangs genannten Art bereitzustellen. Ferner ist es Aufgabe der Erfindung, ein alternatives Verfahren der eingangs genannten Art vorzuschlagen.

Die Aufgabe wird gelöst durch ein Bearbeitungssystem mit den Merkmalen des Anspruchs 1. Das erfindungsgemäße Bearbeitungssystem zeichnet sich dadurch aus, dass in gekoppelter Betriebsstellung des Industrieroboters die Arbeitseinheit nicht antriebsaktiv auf die Trägereinrichtung wirkt und die Trägereinrichtung durch das bewegte Werkstück und/oder durch die bewegte Werkstückträgereinheit wenigstens zeitweise mittels des schwimmenden Lagerungssystems mitbewegt wird. Weiterhin weist die Trägereinrichtung eine Schwebeträgereinheit zur reibungsreduzierten Bewegung des Industrieroboters auf.

Hierbei wird unter einem "koppelbaren Industrieroboter" ein Industrieroboter verstanden, der hinsichtlich seiner Basis - beziehungsweise seiner Trägereinheit - mit einem Werkstück koppelbar ist, wobei die Arbeitsbewegungen des Industrieroboters unabhängig vom eingesetzten Kopplungssystem erfolgen können. Das erfindungsgemäße Bearbeitungssystem enthält somit eine werkstückunabhängige Antriebseinheit zur werkstückautonomen Bewegung des entkoppelten Industrieroboters. Wenn der Industrieroboter mit dem bewegten Werkstück und/oder mit der bewegten Werkstückträgereinheit gekoppelt ist, wird die Trägereinrichtung durch den nun mit dem bewegten Werkstück mitbewegten Industrieroboter mittels des zwischengeschalteten schwimmenden Lagerungssystems mitgeschleppt. Somit hat die Antriebseinheit in dieser gekoppelten Betriebsstellung des Industrieroboters keine antriebsaktive Wirkung auf die Trägereinrichtung und damit auf den Industrieroboter. Dieses Bearbeitungssystem ist vorteilhaft, da aufwendige Regelungssysteme zur Bewegungsanpassung des Industrieroboters relativ zum bewegten Werkstück nicht mehr erforderlich sind. Bei dem Werkstück kann es sich beispielsweise um eine Fahrzeugrohkarosserie handeln oder auch um andere, insbesondere im Rahmen einer Serienproduktion zu fertigende beziehungsweise zu montierende Werkstücke.

Dabei kann die Schwebeträgereinheit als eine Luftkisseneinheit ausgebildet sein. Auf Grund der reibungsreduzierten Bewegung der Trägereinrichtung ist ein ungestörter und reproduzierbar genauer Schleppbetrieb des die Trägereinrichtung mitbewegenden Industrieroboters in gekoppelter Betriebsstellung möglich.

Entsprechend einer bevorzugten Ausführungsform ist die Antriebseinheit als ein insbesondere aktivierbares Reibradsystem ausgebildet, das mindestens ein mit einem für die Trägereinrichtung vorgesehenen Führungssystem in Verbindung stehendes oder in Verbindung bringbares Reibrad enthält. Bei dem Führungssystem kann es sich beispielsweise um eine oder mehrere Führungsschienen handeln, die in einem Werkstattbetrieb verhältnismäßig einfach anbringbar sind. Ein Reibradsystem eignet sich besonders zum definierten Bewegen beziehungsweise Verfahren der Trägereinrichtung, die mittels der Schwebeträgereinheit beziehungsweise der Luftkisseneinheit reibungsreduziert auf dem Untergrund bewegt werden kann. Hierbei handelt es sich um eine durch das Führungssystem richtungsdefinierte Bewegung.

Die Trägereinrichtung kann eine Plattform aufweisen, mit welcher der Industrieroboter in entkoppelter Betriebsstellung starr und in gekoppelter Betriebsstellung schwimmend verbunden ist. Hierdurch kann der Industrieroboter in entkoppelter Betriebsstellung lagedefiniert mit der Plattform verbunden sein, während er in gekoppelter Betriebsstellung relativ zur Plattform schwimmend angeordnet ist, so dass keine störenden Kräfte (ggf. Reaktionskräfte) von der Plattform auf das mit dem Industrieroboter gekoppelte Werkstück übertragen werden können. Es wird somit in jeder Betriebssituation des Industrieroboters eine positionierbeziehungsweise bearbeitungsgünstige Verbindung (starr oder schwimmend) zwischen dem Industrieroboter und der Trägereinrichtung gewährleistet.

Der Industrieroboter ist mit der Plattform vorzugsweise unter Zwischenschaltung eines insbesondere schaltbaren Höhenausgleichssystems verbunden. Das Höhenausgleichssystem dient dazu, gegebenenfalls auftretende Toleranzen in Z-Richtung (Höhenrichtung) des gekoppelten Industrieroboters relativ zur Plattform möglichst selbsttätig auszugleichen. Derartige Höhentoleranzen können z.B. auf Grund der schwebenden Bewegung der Trägereinrichtung oder auf Grund von Lageungenauigkeiten beim bewegten Werkstück auftreten.

Entsprechend einer möglichen Ausführungsvariante kann die Plattform von der Schwebeträgereinheit bewegungskraftreduziert getragen sein. Eine Plattform eignet sich besonders gut zur Realisierung einer reibungsreduzierten Bewegung insbesondere mittels einer Luftkisseneinheit auf dem Untergrund und ermöglicht ferner eine flexible Anordnung eines schwimmend gelagerten Industrieroboters mit schaltbaren Höhenausgleichsystem sowie gegebenenfalls weiterer Funktionseinrichtungen für die Werkstückbearbeitung. Dabei kann der Industrieroboter in gekoppelter Betriebsstellung mittels eines Luftkissensystems schwimmend mit der Plattform verbunden sein. In entkoppelter Betriebsstellung kann der Industrieroboter hingegen bei deaktivierter schwimmender Lagerung starr und damit lagedefiniert mit der Plattform verbunden sein.

Mit Vorteil weist der Industrieroboter eine Gewichtsausgleichseinheit auf, welche in Abhängigkeit einer Bewegung des Industrieroboters mittels einer Steuereinheit des Industrieroboters insbesondere durch eine Verschiebebewegung in eine geeignete Ausgleichsstellung bringbar ist. Die Gewichtsausgleichseinheit kann beispielsweise geeignet verschiebbare beziehungsweise bewegbare Gewichtselemente enthalten, durch deren bewegungsgesteuerte Anordnung in Abhängigkeit der Bewegungen des Industrieroboters ein Gewichtsausgleich erhalten werden kann. Dies ist besonders vorteilhaft, da im gekoppelten Betriebszustand der Industrieroboter relativ zur Plattform schwimmend gelagert ist und auch bei Bewegungen mittels der Gewichtsausgleichseinheit stets im Gleichgewicht gehalten wird. Alternativ zur Verschiebung von Gewichtselementen kann auch ein Gewichtsausgleich mittels eines sich an der Plattform abstützenden und mit dem Industrieroboter in Verbindung stehenden Kolben- /Zylindersystems erzielt werden, das ebenfalls mittels einer Steuereinheit in Abhängigkeit der Bewegungen des Industrieroboters geeignet aktiviert bzw. verstellt werden muss. Ferner können gegebenenfalls zusätzliche Stoßdämpfer vorgesehen sein, welche einen Ausleger des Industrieroboters mit der Plattform verbinden, so dass unerwünschte Verdrehungen des Industrierobotersystems auf Grund von Beschleunigungseffekten vermieden werden können.

Auf der Trägereinrichtung und insbesondere auf der Plattform können zusätzlich eine Steuereinheit des Industrieroboters und/oder mindestens eine Produktionseinheit angeordnet sein. Dabei kann die Produktionseinheit ein weiterer Industrieroboter und/oder ein Ladungsträger und/oder eine Bearbeitungseinheit oder eine andere Funktionseinheit sein. Ferner kann die Produktionseinheit als austauschbares und/oder als erweiterbares Modul ausgebildet sein. Darüber hinaus kann die Trägereinrichtung und insbesondere die Plattform als austauschbares und/oder erweiterbares Modul ausgebildet sein. Ein derartiges Bearbeitungssystem eignet sich besonders zur Durchführung komplexer und/oder verschiedenartiger Bearbeitungsaufgaben im Rahmen einer Serienfertigung beziehungsweise einer Serienmontage.

Das Bearbeitungssystem enthält vorzugsweise eine Kopplungseinrichtung, die mittels einer aktivierbaren schwimmenden Lagerungseinheit mit dem Industrieroboter verbunden ist. Ferner kann die Kopplungseinrichtung in der gekoppelten Betriebsstellung bewegungsstarr und in der entkoppelten Betriebsstellung schwimmend mit dem Industrieroboter verbunden sein. Dabei kann die Verbindung der Kopplungseinrichtung mit dem Industrieroboter direkt am Industrieroboter oder auch indirekt über eine industrieroboterseitige Platte der Trägereinrichtung realisiert sein. Auf Grund der schaltbaren schwimmenden Lagerung der Kopplungseinrichtung relativ zum Industrieroboter ist eine schonende Anbindung der Kopplungseinrichtung an das Werkstück bzw. an die Werkstückträgereinheit möglich, da beim Kopplungsvorgang die Gewichtskraft des Industrieroboters auf Grund der aktivierten schwimmenden Lagerung der Kopplungseinrichtung relativ zum Industrieroboter keinen störenden beziehungsweise schädigenden Einfluss auf das Werkstück hat.

Gemäß einer bevorzugten Ausführungsform weist die Kopplungseinrichtung ein Verbindungssystem zur Herstellung einer Verbindung mit der bewegten Werkstückträgereinheit und ein Greifsystem zur Herstellung einer Verbindung mit dem bewegten Werkstück auf. Eine derart kombinierte und insbesondere starre Verbindung der Kopplungseinrichtung mit der Werkstückträgereinheit und mit dem Werkstück ermöglicht die Herstellung einer besonders schonenden Verbindung der Kopplungseinrichtung mit dem zu bearbeitenden Werkstück.

Ferner wird die Aufgabe gelöst durch ein Verfahren mit den Merkmalen des Anspruchs 16. Das erfindungsgemäße Verfahren zeichnet sich dadurch aus, dass im gekoppelten Betriebszustand der durch das bewegte Werkstück mitbewegte Industrieroboter die Trägereinrichtung mittels eines schwimmenden Lagerungssystems wenigstens zeitweise mitbewegt, wobei die Trägereinrichtung mittels einer Schwebeträgereinheit bewegungsreibungsreduziert auf dem Untergrund bewegbar ist. Mittels des Verfahrens lassen sich die in Bezug auf das Bearbeitungssystem vorerwähnten Vorteile erzielen.

Das schwimmende Lagerungssystem kann als ein Luftkissensystem und die Schwebeträgereinheit als eine Luftkisseneinheit ausgebildet sein. Ferner kann die Trägereinrichtung auf dem Untergrund mittels eines Führungssystems richtungsdefiniert bewegbar sein. Ein derartiges Bearbeitungssystem ist besonders handhabungsfreundlich betreibbar.

Gemäß einer bevorzugten Ausführungsvariante wird der Industrieroboter starr mit der Trägereinrichtung verbunden, anschließend die Trägereinrichtung in einer Ankoppelstellung relativ zum Werkstück bewegt, anschließend eine schwimmend mit dem Industrieroboter verbundene Kopplungseinrichtung an das Werkstück und/oder an die Werkstückträgereinheit gekoppelt, anschließend der Industrieroboter schwimmend mit der Trägereinheit verbunden, anschließend die angekoppelte Kopplungseinrichtung starr mit dem Industrieroboter verbunden und anschließend die Trägereinrichtung bei einer Werkstückbewegung mittels des schwimmenden Lagerungssystems des Industrieroboters mitbewegt. Dabei kann das Werkstück zum Zeitpunkt des Ankoppelns der Kopplungseinrichtung bewegt werden. Somit ist es möglich, ein Werkstück, das sich kontinuierlich bewegt, mittels des Bearbeitungssystems in gekoppelter Betriebsstellung mittels des Industrieroboters zu bearbeiten. Gegebenenfalls kann das Werkstück auch erst nach Herstellung der gekoppelten Betriebsstellung in Bewegung versetzt werden.

Weitere Vorteile der Erfindung ergeben sich aus der Beschreibung.

Die Erfindung wird anhand mehrerer bevorzugter Ausführungsbeispiele unter Bezugnahme auf eine schematische Zeichnung näher erläutert.

Dabei zeigen:
- Fig. 1: Eine schematische Draufsicht auf ein erfindungsgemäßes Bearbeitungssystem 10,
- Fig. 2 bis 5: jeweils eine schematische Perspektivdarstellung eines Teils des Bearbeitungssystems der Figur 1 in vergrößertem Maßstab,
- Fig. 6 und 7: jeweils eine schematisch Perspektivdarstellung des erfindungsgemäßen Bearbeitungssystems entsprechend zwei weiterer, alternativer Ausführungsformen.

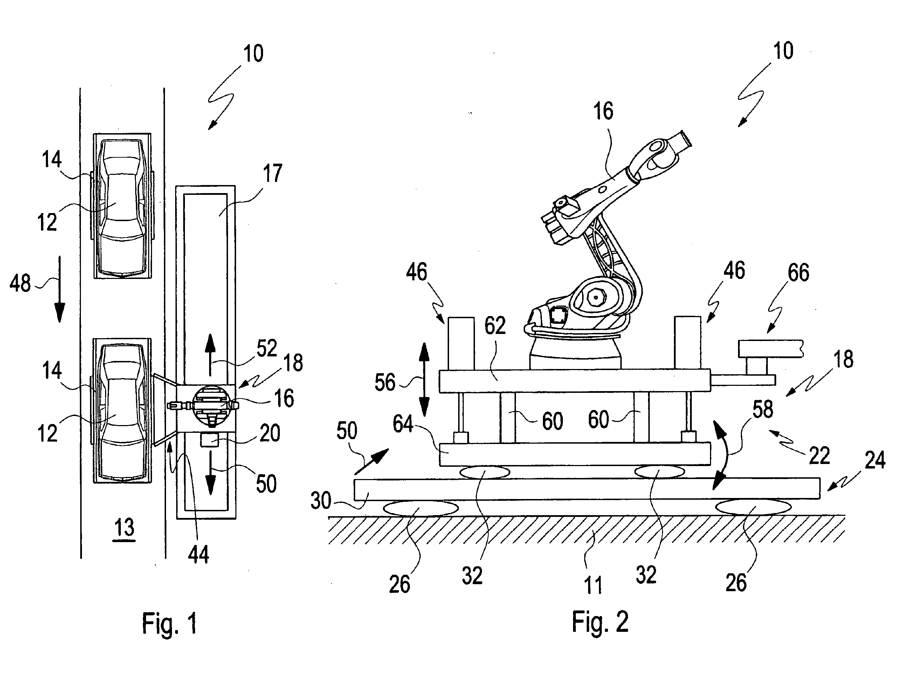

Das Bearbeitungssystem 10 enthält gemäß Figur 1 eine Werkstückförderbahn 13, auf welcher Werkstücke 12, entsprechend dem dargestellten Ausführungsbeispiel zu bearbeitende Fahrzeugkarosserien, in Richtung des Pfeils 48 entlang einer Bearbeitungslinie gefördert werden. Ferner enthält das Bearbeitungssystem 10 eine Industrieroboterförderbahn 17, auf welcher ein Industrieroboter 16 gemäß den Pfeilen 50, 52 bewegt werden kann. Die Fahrzeugkarosserie 12, welche z.B. eine Rohbaukarosserie sein kann, wird von einer Werkstückträgereinheit 14, die auch als Adaptereinrichtung bezeichnet wird, lagedefiniert getragen und gemäß Pfeil 48 auf der Werkstückförderbahn 13 bewegt. Der Industrieroboter 16 ist auf einer Trägereinrichtung 18 angeordnet, welche mittels einer Antriebseinheit 20 unabhängig von der Fahrzeugkarosserie 12 bzw. von der Werkstückträgereinheit 14 auf der Industrieroboterförderbahn 17 gemäß den Pfeilen 50, 52 bewegt werden kann. Das Bearbeitungssystem 10 dient zum Bearbeiten der bewegten Fahrzeugkarosserie 12 mittels des Industrieroboters 16. Hierzu ist der Industrieroboter 16 zeitweise starr an die bewegte Fahrzeugkarosserie 12 und/oder an die bewegte Werkstückträgereinheit 14 koppelbar. In Figur 1 ist das Bearbeitungssystem 10 in einer entsprechend gekoppelten Betriebsstellung 44 dargestellt.

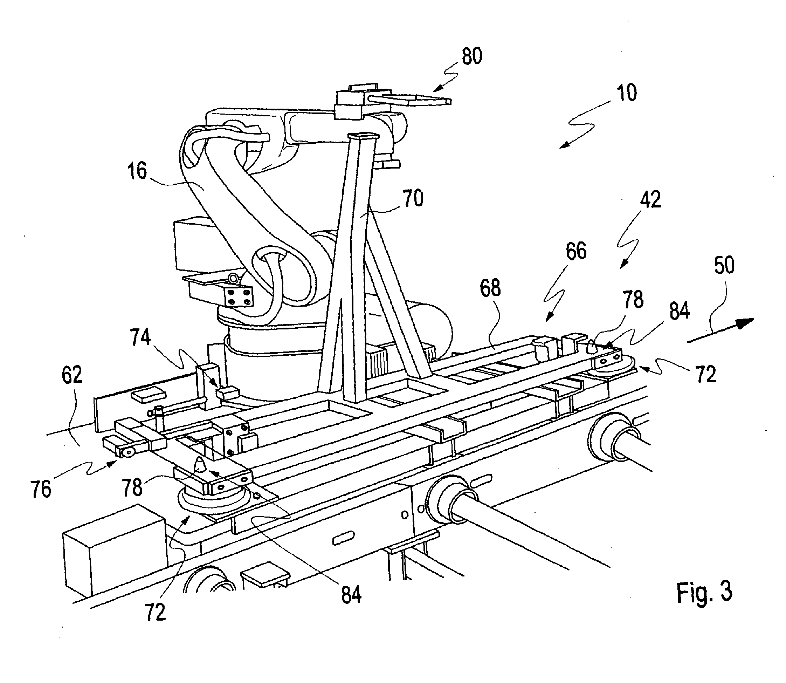

Figur 2 zeigt eine schematische Hinteransicht der den Industrieroboter 16 auf dem Untergrund 11 der Industrieroboterförderbahn 17 tragenden Trägereinrichtung 18. Der Industrieroboter 16 wird von der Trägereinrichtung 18 unter Zwischenschaltung eines schwimmenden Lagerungssystems 22 getragen. Das schwimmende Lagerungssystem 22 enthält eine erste Trägerplatte 62, mit welcher der Industrieroboter 16 starr verbunden ist. Die erste Trägerplatte 62 ist ihrerseits mit einer zweiten Trägerplatte 64 des schwimmenden Lagerungssystems 22 unter Zwischenschaltung von Höhenausgleichssystemen 46 und mehrerer Führungseinheiten 60 verbunden. Die Höhenausgleichssysteme 46 können als verstellbare Zylindersysteme ausgebildet sein, mittels welchen eine erwünschte Höhenverstellung der ersten Trägerplatte 62 gegenüber der zweiten Trägerplatte 64 und damit ein insbesondere selbsttätiger Höhenausgleich des Industrieroboters 16 gegenüber der zweiten Trägerplatte 64 entsprechend Doppelpfeil 56 während der Ankopplungsphase möglich ist. Die zweite Trägerplatte 64 ist unter Zwischenschaltung eines Luftkissensystems 32 derart mit einer Plattform 30 der Trägereinrichtung 18 verbunden, dass ein rotatorischer Toleranzausgleich in Form einer Taumelbewegung der zweiten Trägerplatte 64 und damit auch des Industrieroboters 16 entsprechend Doppelpfeil 58 insbesondere in der gekoppelten Betriebsstellung 44 möglich ist. Die Plattform 30 der Trägereinrichtung 18 ist mittels einer Schwebeträgereinheit 24 in Form einer Luftkisseneinheit 26 gegenüber dem Untergrund 11 der Industrieroboterförderbahn 17 derart abgestützt, dass eine reibungsreduzierte Bewegung der Plattform 30 mit dem schwimmenden Lagerungssystem 22 und dem Industrieroboter 16 auf der Industrieroboterförderbahn 17 gemäß den Pfeilen 50, 52 möglich ist. Mit der ersten Trägerplatte 62 ist eine Kopplungseinrichtung 66 verbunden, welche in den Figuren 3 bis 5 detaillierter dargestellt ist und im Folgenden eingehender erläutert wird.

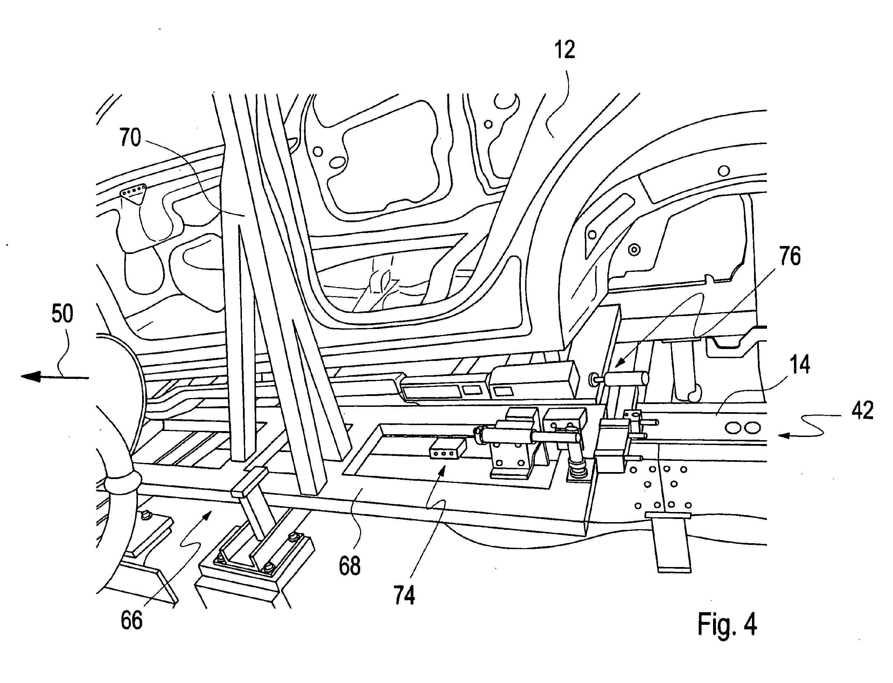

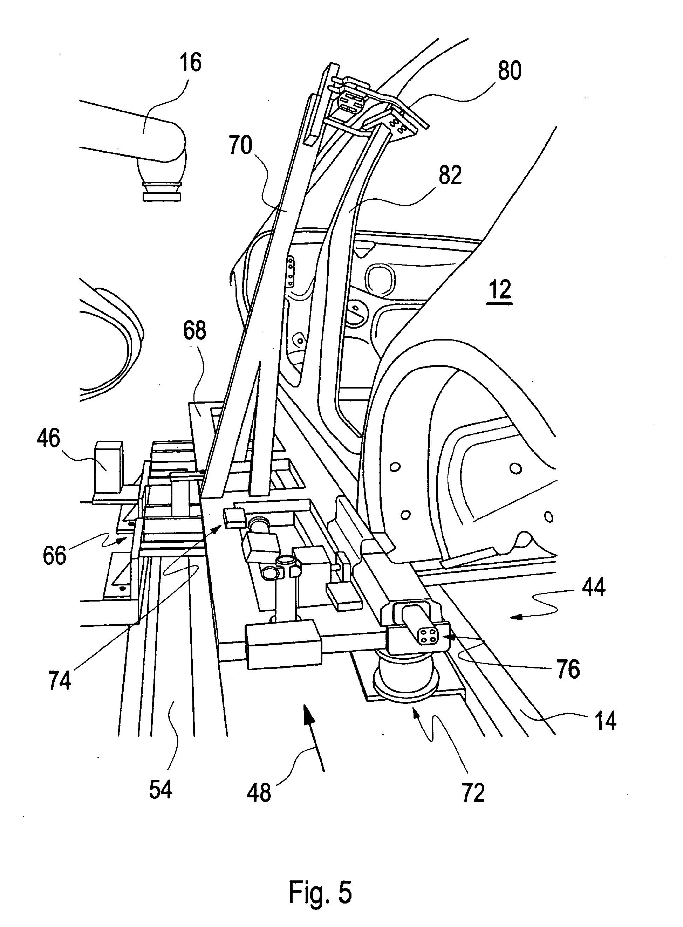

Entsprechend den Figuren 3 bis 5 enthält die Kopplungseinrichtung 66 einen Kopplungsrahmen 68 und einen Kopplungsarm 70. Die Kopplungseinrichtung 66 ist mittels einer schwimmenden Lagerungseinheit 72 insbesondere in Form mehrerer Balgzylinder mit der ersten Trägerplatte 62 verbunden. Die schwimmende Lagerungseinheit 72 ist in Abhängigkeit einer jeweiligen Betriebsstellung, nämlich einer entkoppelten Betriebsstellung 42 (siehe Figur 4) und einer gekoppelten Betriebsstellung 44 (siehe Figur 5) aktivierbar. Zur Herstellung einer Verbindung der Kopplungseinrichtung 66 mit der bewegten Werkstückträgereinheit 14 weist die Kopplungseinrichtung 66 ein Verbindungssystem 84 auf, das mit mehreren Zentrierelementen 78 am Kopplungsrahmen 68 versehen ist. Zusätzlich kann eine Verbindung der Kopplungseinrichtung 66 mit der bewegten Fahrzeugkarosserie 12 mittels eines Greifsystems 80 hergestellt werden, das am Kopplungsarm 70 angeordnet ist. Das Greifsystem 80 dient beim dargestellten Ausführungsbeispiel gemäß Figur 5 zur Herstellung einer starren Verbindung der Kopplungseinrichtung 66 mit der B-Säule 82 der Fahrzeugkarosserie 12. Zur Gewährleistung einer betriebsgünstigen und lagegenauen Ankopplung der Kopplungseinrichtung 66 an die Fahrzeugkarosserie 12 beziehungsweise an die Werkstückträgereinheit 14 weist die Kopplungseinrichtung 66 an ihrem Kopplungsrahmen 68 ein Lichtschrankensystem 74 und ein Anschlagsystem 76 in Form eines Anschlagzylinders mit Dämpfer auf.

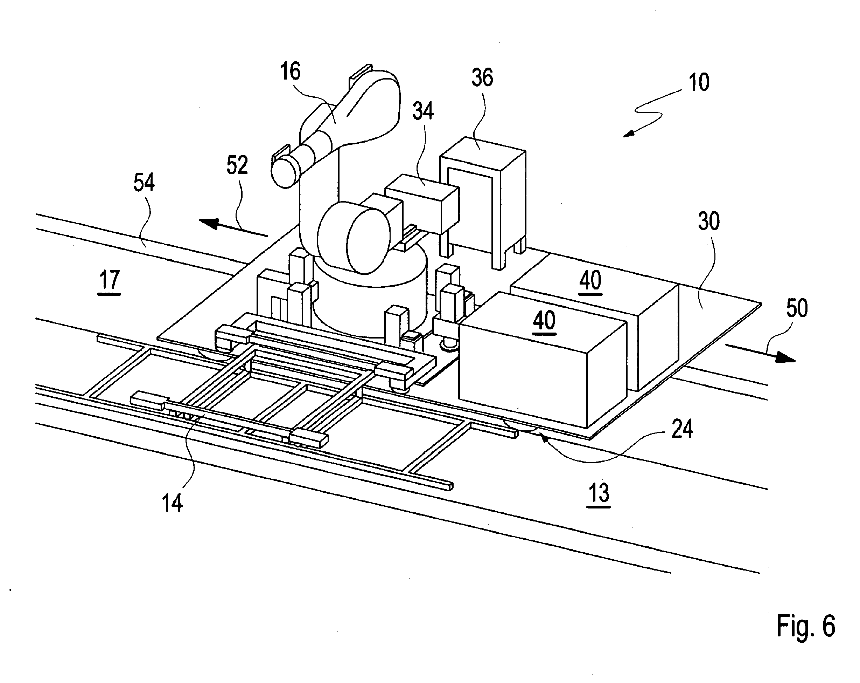

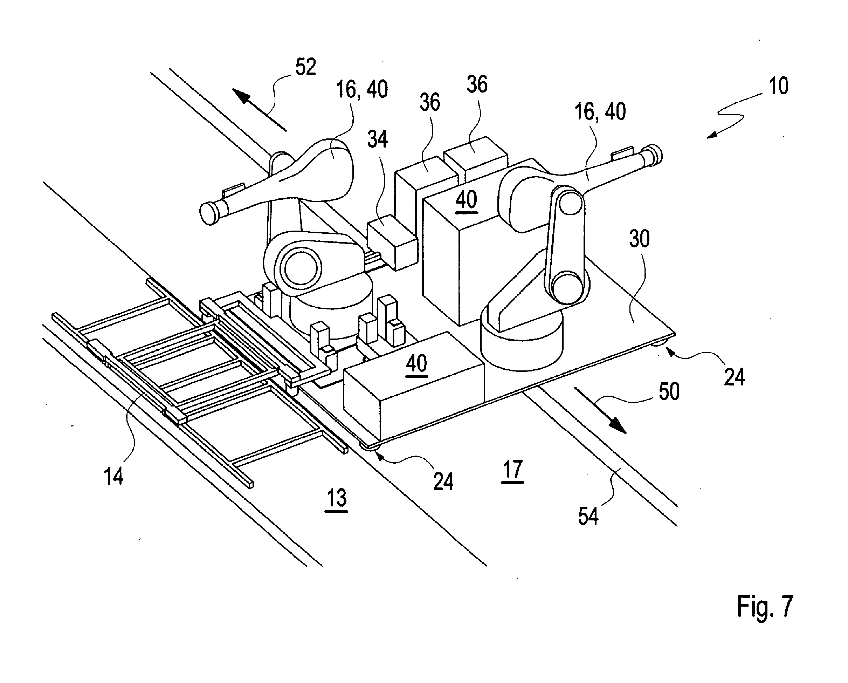

Gemäß den Figuren 6 und 7, welche in Ergänzung zum oben beschriebenen Bearbeitungssystem 10 zwei alternative Ausführungsformen des Bearbeitungssystems 10 zeigen, ist der Industrieroboter 16 und/oder die erste Trägerplatte 62 und/oder die zweite Trägerplatte 64 mit einer Gewichtsausgleichseinheit 34 versehen. Dabei kann die Gewichtsausgleichseinheit 34 derart ausgebildet sein, dass sie geeignet bewegbare und insbesondere geeignet verschiebbare Ausgleichsgewichte enthält. Gegebenenfalls können auch Ausgleichszylindersysteme und/oder Ausgleichsstoßdämpfer zum geeigneten Gewichtsausgleich des sich bei der Bearbeitung der Fahrzeugkarosserie 12 bewegenden Industrieroboters 16 vorgesehen sein. Auf der Plattform 30 können eine oder mehrere Steuereinheiten 36 und/oder eine oder mehrere Produktionseinheiten 40 angeordnet sein. Bei der Produktionseinheit 40 kann es sich um einen oder mehrere Industrieroboter (siehe Figur 7) und/oder um einen mehrere Ladungsträger (siehe Figuren 6, 7) und/oder um eine oder mehrere Bearbeitungseinheiten (siehe Figur 7) handeln. Gegebenenfalls kann die Produktionseinheit 40 als austauschbares und/oder als erweiterbares Modul ausgebildet sein.

Entsprechend den Figuren 5 bis 7 enthält das Bearbeitungssystem 10 ein Führungssystem 54 insbesondere in Form einer Führungsschiene, wobei das Führungssystem 54 eine richtungsdefinierte Bewegung der Trägereinrichtung 18 beziehungsweise der Plattform 30 entsprechend den Pfeilen 50, 52 gewährleistet. Die Bewegung der Plattform 30 wird durch die Antriebseinheit 20 realisiert, welche beispielsweise als ein Reibradsystem ausgebildet sein kann, das mit dem Führungssystem 54 in gegebenenfalls schaltbaren operativen Wirkkontakt steht und eine werkstückunabhängige Bewegung der Plattform 30 gemäß den Pfeilen 50, 52 entlang des Führungssystems 54 auf der Industrieroboterförderbahn 17 gewährleistet.

Im Folgenden wird die Funktionsweise des Bearbeitungssystems 10 zur Bearbeitung der Fahrzeugkarosserie 12 beschrieben. Während eine Fahrzeugkarosserie 12 mittels der Werkstückträgereinheit 14 auf der Werkstückförderbahn 13 gemäß Pfeil 48 (siehe Figur 1) bewegt wird, befindet sich die Trägereinrichtung 18 mit dem Industrieroboter 16 in einer entkoppelten Betriebsstellung 42 (siehe Figur 3) und insbesondere in einer in Werkstückförderrichtung (Pfeil 48) beabstandeten Position auf der Industrieroboterförderbahn 17. Der Industrieroboter 16 muss somit mittels einer Bewegung der Werkstückträgereinheit 14 auf der Industrieroboterförderbahn 17 in Richtung Pfeil 50 bewegt werden, um in einem definierten Ankoppelbereich relativ zur bewegten Fahrzeugkarosserie 12 positioniert werden zu können. Hierzu wird zunächst mittels des Höhenausgleichssystem 46 die erste Trägerplatte 62 und somit auch die Kopplungseinrichtung 66 auf eine vorgegebene Anschlaghöhe für das Anschlagsystem 76 gehoben. Anschließend wird das Anschlagsystem 76 aus einer Passivstellung (siehe Figur 3) in eine definierte Aktivstellung (siehe Figur 4) geschwenkt. Die Plattform 30 kann nun mittels der Antriebseinheit 20 und der Schwebeträgereinheit 24 nach Lösen von gegebenenfalls vorhandenen Bremsen auf der Industrieroboterbahn 17 gemäß Pfeil 50 in Richtung der bewegten Fahrzeugkarosserie 12 reibungsarm beschleunigt und bewegt werden, bis die Kopplungseinrichtung 66 die Position gemäß Figur 4 erreicht. Bei positionsabhängiger Aktivierung des Lichtschrankensystems 74 wird die Anfahrgeschwindigkeit der Plattform 30 automatisch reduziert, um ein sanftes Positionieren der Kopplungseinrichtung 66 relativ zur Werkstückträgereinheit 14 zu gewährleisten. Hierzu wirkt das Lichtschrankensystem 74 der Kopplungseinrichtung 66 mit der Werkstückträgereinheit 14 zusammen. Die Plattform 30 wird relativ zur bewegten Fahrzeugkarosserie 12 in Förderrichtung (Pfeil 50) weiterbewegt, bis das Anschlagsystem 76, welches ebenfalls mit der Werkstückträgereinheit 14 zusammenwirkt, eine definierte Anschlagposition erreicht hat. Bis zu diesem Zeitpunkt ist Bewegung der Plattform 30 entlang des Führungssystems 54 mittels der Antriebseinheit 20 werkstückunabhängig erfolgt.

Die nun eingenommene Anschlagposition gewährleistet eine exakt übereinstimmende Bewegung der Plattform 30 und der Werkstückträgereinheit 14 in Förderrichtung (Pfeile 50, 48). Nun kann die schwimmende Lagerungseinheit 72 (siehe Figur 3) derart aktiviert werden, dass der Kopplungsrahmen 68 mit den Zentrierelementen 78 in die entsprechend mit geeigneten Aufnahmen versehene Werkstückträgereinheit 14 einfahren kann unter Ausbildung einer lagedefinierten formschlüssigen Verbindung. Gegebenenfalls kann zusätzlich eine formschlüssige Verriegelung zwischen dem Kopplungsrahmen 68 und der Werkstückträgereinheit 14 hergestellt werden. Ferner wird nun durch Aktivieren des Greifsystems 80 eine starre Verbindung zwischen dem Kopplungsarm 70 und der B-Säule 82 der Fahrzeugkarosserie 12 geschaffen. In dieser Betriebsphase ist die Kopplungseinrichtung 66 mittels der schwimmenden Lagerungseinheit 72 schwimmend gegenüber der ersten Trägerplatte 62 und somit gegenüber dem Industrieroboter 16 gelagert. Anschließend wird das Höhenausgleichssystem 46 aus einer in Richtung des Doppelpfeils 56 (siehe Figur.2) starren Betriebsstellung in eine schwimmende Betriebsstellung geschaltet, so dass ein Z-Ausgleich zur Kompensierung von Toleranzschwankungen zwischen der ersten Trägerplatte 62 und somit auch des Industrieroboters 16 und der Kopplungseinrichtung 66 möglich ist. Spätestens jetzt wird auch das Luftkissensystem 32 derart aktiviert, dass eine schwimmende Lagerung.der zweiten Trägerplatte 64 relativ zur Plattform 30 realisiert ist. Nun wird die schwimmende Lagerungseinheit 72 derart aktiviert, dass eine starre Kopplung zwischen der Kopplungseinrichtung 66 und der ersten Trägerplatte 62 und somit auch des Industrieroboters 16 erfolgt unter gleichzeitiger Gewährleistung des erwähnten Z-Ausgleichs und eines Winkelstellungsausgleichs der ersten Trägerplatte 62 (siehe Figur 2, Doppelpfeil 58). Auf Grund des wirkenden Luftkissensystems 32 und des Höhenausgleichssystems 46 können auch minimale Bewegungen der Fahrzeugkarosserie 12 direkt und unter verhältnismäßig geringer Kraft auf die erste Trägerplatte 62 und damit auf den Industrieroboter 16 übertragen werden. Mittels der aktiven Gewichtsausgleichseinheit 34 des Industrieroboters 16 wird ein sich auf die Bearbeitung der Fahrzeugkarosserie 12 günstig auswirkender Gewichtsausgleich des sich bewegenden Industrieroboters 16 gewährleistet.

Sämtliche Ankoppelschritte können somit an der bewegten Karosserie 12 erfolgen. Nach Herstellung der gekoppelten Betriebsstellung 44 (siehe Figur 5) wird die Trägereinrichtung 18 durch die Bewegung der Fahrzeugkarosserie 12 und durch die entsprechende Bewegung der Werkstückträgereinheit 14 mittels des schwimmenden Lagerungssystems 22 unter Überwindung verhältnismäßig geringer Reibungskräfte auf dem Untergrund 11 mitbewegt. Die Trägereinrichtung 18 wird somit mit der bewegten Fahrzeugkarosserie 12 und der bewegten Werkstückträgereinheit 14 mitgeschleppt, wobei die gegebenenfalls eingeschaltete oder auch inzwischen ausgeschaltete Antriebseinheit 20 nicht mehr antriebsaktiv auf die Trägereinrichtung 18 wirkt.

Die Fahrzeugkarosserie 12 kann nun reproduzierbar genau und flexibel mittels des Bearbeitungssystems 10 während ihrer Beförderung entlang der Werkstückförderbahn 13 bearbeitet werden. Es können getaktete Förderbahnabschnitte und Pufferstrecken entlang der Bearbeitungslinie vermieden werden. Es können automatisierte und insbesondere vollautomatisierte Bearbeitungsprozesse mit dem Förderprozess integriert werden. Mögliche Einsatzgebiete für das Bearbeitungssystem 10 sind z.B. die Montage von Dämmmatten mittels Klebetechnik, die Federbeinmontage, die Scheibenmontage, der Einbau eines Ersatz- bzw. Notrads und/oder die Batteriemontage. Gegebenenfalls können durch das Bearbeitungssystem 10 während der direkten Bearbeitung der Fahrzeugkarosserie 12 gleichzeitig auch weitere, vorbereitende Arbeiten an der Fahrzeugkarosserie 12 und/oder an Anbauteilen ausgeführt werden.

Das Bearbeitungssystem 10 kann derart ausgebildet sein, das ein Heranfahren an die Fahrzeugkarosserie 12 bzw. an die Werkstückträgereinheit 14 von hinten in Förderrichtung (siehe Figur 1, Pfeil 48) der Fahrzeugkarosserie 12 und auch von vorne entgegen der Förderrichtung der Fahrzeugkarosserie 12 möglich ist. Hierzu sollte das Bearbeitungssystem 10 mit dem Anschlagsystem 76 in Passivstellung (siehe Figur 3) an der Werkstückträgereinheit 14 ohne Anschlagkontakt vorbeifahren können.

## Patentansprüche

1. Bearbeitungssystem (10) zum Bearbeiten eines bewegten Werkstücks (12) mittels eines zeitweise starr an das Werkstück (12) und/oder an eine bewegbare Werkstückträgereinheit (14) koppelbaren Industrieroboters (16), wobei der Industrieroboter (16) in entkoppelter Betriebsstellung (42) von einer Trägereinrichtung (18) getragen wird, die mittels einer antriebsaktiv wirkenden Antriebseinheit (20) werkstückunabhängig bewegbar ist, und in gekoppelter Betriebsstellung (44) mittels eines schwimmenden Lagerungssystems (22) relativ zur Trägereinrichtung (18) schwimmend gelagert ist,
**dadurch gekennzeichnet, dass**
in gekoppelter Betriebsstellung (44) des Industrieroboters (16) die Antriebseinheit (20) nicht antriebsaktiv auf die Trägereinrichtung (18) wirkt und die Trägereinrichtung (18) durch das bewegte Werkstück (12) und/oder durch die bewegte Werkstückträgereinheit (14) wenigstens zeitweise mittels des schwimmenden Lagerungssystems (22) mitbewegt wird, wobei die Trägereinrichtung (18) eine Schwebeträgereinheit (24) aufweist zur reibungsreduzierten Bewegung des Industrieroboters (16).

2. Bearbeitungssystem nach Anspruch 1,
**dadurch gekennzeichnet, dass**
die Schwebeträgereinheit (24) als eine Luftkisseneinheit (26) ausgebildet ist.

3. Bearbeitungssystem nach einem der vorhergehenden Ansprüche,
**dadurch gekennzeichnet, dass**
die Antriebseinheit (20) als ein insbesondere aktivierbares Reibradsystem ausgebildet ist, das mindestens ein mit einem für die Trägereinrichtung (18) vorgesehenen Führungssystem (54) in Verbindung stehendes oder in Verbindung bringbares Reibrad enthält.

4. Bearbeitungssystem nach einem der vorhergehenden Ansprüche,
**dadurch gekennzeichnet, dass**
die Trägereinrichtung (18) eine Plattform (30) aufweist, mit welcher der Industrieroboter (16) in entkoppelter Betriebsstellung (42) starr und in gekoppelter Betriebsstellung schwimmend verbunden ist.

5. Bearbeitungssystem nach Anspruch 4,
**dadurch gekennzeichnet, dass**
der Industrieroboter (16) mit der Plattform (30) unter Zwischenschaltung eines insbesondere schaltbaren Höhenausgleichssystems (46) verbunden ist.

6. Bearbeitungssystem nach Anspruch 4 oder 5,
**dadurch gekennzeichnet, dass**
die Plattform (30) von der Schwebeträgereinheit (24) bewegungskraftreduziert getragen ist.

7. Bearbeitungssystem nach Anspruch 4 bis 6,
**dadurch gekennzeichnet, dass**
der Industrieroboter (16) in gekoppelter Betriebsstellung (44) mittels eines Luftkissensystems (32) schwimmend mit der Plattform (30) verbunden ist.

8. Bearbeitungssystem nach einem der vorgehenden Ansprüche,
**dadurch gekennzeichnet, dass**
der Industrieroboter (16) eine Gewichtsausgleichseinheit (34) aufweist, welche in Abhängigkeit einer Bewegung des Industrieroboters (16) mittels einer Steuereinheit (36) des Industrieroboters (16) insbesondere durch eine Verschiebebewegung in eine geeignete Ausgleichsstellung bringbar ist.

9. Bearbeitungssystem nach einem der vorhergehenden Ansprüche,
**dadurch gekennzeichnet, dass**
auf Trägereinrichtung (18) und insbesondere auf der Plattform (30) zusätzlich eine Steuereinheit (36) des Industrieroboters (16) und/oder mindestens eine Produktionseinheit (40) angeordnet sind.

10. Bearbeitungssystem nach Anspruch 9,
**dadurch gekennzeichnet, dass**
die Produktionseinheit (40) ein weiterer Industrieroboter und/oder ein Ladungsträger und/oder eine Bearbeitungseinheit ist.

11. Bearbeitungssystem nach Anspruch 9 oder 10,
**dadurch gekennzeichnet, dass**
die Produktionseinheit (40) als austauschbares und/oder als erweiterbares Modul ausgebildet ist.

12. Bearbeitungssystem nach einem der vorhergehenden Ansprüche,
**dadurch gekennzeichnet, dass**
die Trägereinrichtung (18) und insbesondere die Plattform (30) als austauschbares und/oder erweiterbares Modul ausgebildet ist.

13. Bearbeitungssystem nach einem der vorhergehenden Ansprüche,
**dadurch gekennzeichnet, dass**
es eine Kopplungseinrichtung (66) enthält, die mittels einer aktivierbaren schwimmenden Lagerungseinheit (72) mit dem Industrieroboter (16) verbunden ist.

14. Bearbeitungssystem nach Anspruch 13,
**dadurch gekennzeichnet, dass**
die Kopplungseinrichtung (66) in der gekoppelten Betriebsstellung (44) bewegungsstarr und in der entkoppelten Betriebsstellung (42) schwimmend mit dem Industrieroboter (16) verbunden ist.

15. Bearbeitungssystem nach Anspruch 13 oder 14,
**dadurch gekennzeichnet, dass**
die Kopplungseinrichtung (66) ein Verbindungssystem (84) zur Herstellung einer Verbindung mit der bewegten Werkstückträgereinheit (14) und ein Greifsystem (80) zur Herstellung einer Verbindung mit dem bewegten Werkstück (12) aufweist.

16. Verfahren zum Positionieren eines zeitweise starr an ein bewegbares Werkstück (12) und/oder an eine bewegbare Werkstückträgereinheit (14) ankoppelbaren Industrieroboters (16) eines Bearbeitungssystems (10) nach einem der vorhergehenden Ansprüche, wobei das Bearbeitungssystem (10) eine werkstückunabhängig mittels einer Antriebseinheit (20) bewegbare Trägereinrichtung (18) aufweist, welche den Industrieroboter (16) im entkoppelten Betriebszustand (42) trägt,
**dadurch gekennzeichnet, dass**
im gekoppelten Betriebszustand (44) der durch das bewegte Werkstück mitbewegte Industrieroboter (16) die Trägereinrichtung (18) mittels eines schwimmenden Lagerungssystems (22) wenigstens zeitweise mitbewegt, wobei die Trägereinrichtung (18) mittels einer Schwebeträgereinheit (24) bewegungsreibungsreduziert auf dem Untergrund (11) bewegbar ist.

17. Verfahren nach Anspruch 16,
**dadurch gekennzeichnet, dass**
das schwimmende Lagerungssystem (22) ein Luftkissensystem (32) ist und die Schwebeträgereinheit (24) als eine Luftkisseneinheit (26) ausgebildet ist.

18. Verfahren nach Anspruch 16 oder 17,
**dadurch gekennzeichnet, dass**
die Trägereinrichtung (18) auf dem Untergrund (11) mittels eines Führungssystems (38) richtungsdefiniert bewegbar ist.

19. Verfahren nach einem der Ansprüche 16 bis 18,
**dadurch gekennzeichnet, dass**
der Industrieroboter (16) starr mit der Trägereinrichtung (18) verbunden wird, anschließend die Trägereinrichtung (18) in eine Ankoppelstellung relativ zum Werkstück (12) bewegt wird, anschließend eine schwimmend mit dem Industrieroboter (16) verbundene Kopplungseinrichtung (66) an das Werkstück (12) und/oder an die Werkstückträgereinheit (14) gekoppelt wird, anschließend der Industrieroboter (16) schwimmend mit der Trägereinrichtung (18) verbunden wird, anschließend die angekoppelte Kopplungseinrichtung (66) starr mit dem Industrieroboter (16) verbunden wird und anschließend die Trägereinrichtung (18) bei einer Werkstückbewegung (48) mittels des schwimmenden Lagerungssystems (22) des Industrieroboters (16) mitbewegt wird.

20. Verfahren nach Anspruch 19,
**dadurch gekennzeichnet, dass**
das Werkstück (12) zum Zeitpunkt des Ankoppelns der Kopplungseinrichtung (66) bewegt wird.

## Claims

1. Processing system (10) for processing a moving workpiece (12) by means of an industrial robot which can intermittently be rigidly coupled to the workpiece (12) and/or to a movable work carrier unit (14), wherein the industrial robot (16), when in a decoupled operating position (42), is supported by a carrier device (18) movable independent of the workpiece by means of a drive unit (20) operating in a drive-active manner, and, when in a coupled operating position (44), is mounted by means of a floating bearing system (22) to float relative to the carrier device (18),
**characterised in that,**
in the coupled operating position (44) of the industrial robot (16), the drive unit (20) does not act on the carrier device (18) in a drive-active manner and the carrier device (18) is moved concomitantly, at least intermittently, by the moving workpiece (12) and/or by the moving work carrier unit (14) by means of the floating bearing system (22), the carrier unit (18) comprising a floating carrier unit (24) for moving the industrial robot (16) with reduced friction.

2. Processing system according to claim 1,
**characterised in that**
the floating carrier unit (24) is designed as an air cushion unit (26).

3. Processing system according to any of the preceding claims,
**characterised in that**
the drive unit (20) is designed as an in particular selectable friction gear system including at least one friction gear which is or can be connected to a guide system (54) provided for the carrier device (18).

4. Processing system according to any of the preceding claims,
**characterised in that**
the carrier device (18) comprises a platform (30) to which the industrial robot (16) is rigidly connected in its decoupled operating position (42) and floatingly connected in its coupled operating position.

5. Processing system according to claim 4,
**characterised in that**
the industrial robot (16) is connected to the platform (30) via an in particular switchable interposed height compensation system (46).

6. Processing system according to claim 4 or 5,
**characterised in that**
the platform (30) is supported by the floating carrier unit (24) with reduced motional force.

7. Processing system according to any of claims 4 to 6,
**characterised in that**
the industrial robot (16) is floatingly connected to the platform (30) by means of an air cushion system (32) in its coupled operating position (44).

8. Processing system according to any of the preceding claims,
**characterised in that**
the industrial robot (16) comprises a weight compensation unit (34) which, in dependence on a movement of the industrial robot (16), can be brought into a suitable compensation position by means of a control unit (36) of the industrial robot (16), in particular through a traversing movement.

9. Processing system according to any of the preceding claims,
**characterised in that**
a control unit (36) of the industrial robot (16) and/or at least one production unit (40) is/are additionally placed on the carrier device (18) and in particular on the platform (30).

10. Processing system according to claim 9,
**characterised in that**
the production unit (40) is a further industrial robot and/or a load carrier and/or a processing unit.

11. Processing system according to claim 9 or 10,
**characterised in that**
the production unit (40) is designed as a replaceable and/or expandable module.

12. Processing system according to any of the preceding claims,
**characterised in that**
the carrier device (18) and in particular the platform (30) is designed as a replaceable and/or expandable module.

13. Processing system according to any of the preceding claims,
**characterised in that**
it includes a coupling device (66) connected to the industrial robot (16) by means of a selectable floating bearing unit (72).

14. Processing system according to claim 13,
**characterised in that**
the coupling device (66) is connected to the industrial robot (16) in a motionally rigid manner in the coupled operating position (44) and floatingly in the decoupled operating position (42).

15. Processing system according to claim 13 or 14,
**characterised in that**
the coupling device (66) comprises a connecting system (84) for establishing a connection to the moving work carrier unit (14) and a gripping system (80) for establishing a connection to the moving workpiece (12).

16. Method for positioning an industrial robot (16) of a processing system (10) according to any of the preceding claims, which can intermittently be rigidly coupled to a movable workpiece (12) and/or to a movable work carrier unit (14), wherein the processing system (10) comprises a carrier device (18) movable independent of the workpiece, which supports the industrial robot (16) in its decoupled operating position (42),
**characterised in that,**
in the coupled operating position (44), the industrial robot (16) moved concomitantly by the moving workpiece at least intermittently moves the carrier device (18) concomitantly by means of a floating bearing system (22), the carrier device (18) being movable on the base (11) with reduced friction by means of a floating carrier unit (24).

17. Method according to claim 16,
**characterised in that**
the floating bearing system (22) is an air cushion system (32) and the floating carrier unit (24) is designed as an air cushion unit (26).

18. Method according to claim 16 or 17,
**characterised in that**
the carrier device (18) is movable in defined directions on the base (11) by means of a guide system (38).

19. Method according to any of claims 16 to 18,
**characterised in that**
the industrial robot (16) is rigidly connected to the carrier device (18), whereupon the carrier device (18) is moved into a coupling position relative to the workpiece (12), whereupon a coupling device (66) floatingly connected to the industrial robot (16) is coupled to the workpiece (12) and/or to the work carrier unit (14), whereupon the industrial robot (16) is floatingly connected to the carrier device (18), whereupon the coupled coupling device (66) is rigidly connected to the industrial robot (16), whereupon the carrier device (18) is moved concomitantly with a workpiece movement (48) by means of the floating bearing system (22) of the industrial robot (16).

20. Method according to claim 19,
**characterised in that**
the workpiece (12) is moved while the coupling device (66) is being coupled.

## Revendications

1. Système d'usinage (10) pour usiner une pièce mobile (12) au moyen d'un robot industriel (16) pouvant être accouplé fixement et temporairement à la pièce à usiner (12) et / ou à une unité porte-pièce mobile (14), le robot industriel (16) étant porté dans la position fonctionnelle désaccouplée (42) par un dispositif de support (18) qui peut être déplacé indépendamment de la pièce à usiner au moyen d'une unité d'entraînement (20) agissant par entraînement, et étant monté dans la position fonctionnelle accouplée (44) de manière flottante par rapport au dispositif de support (18) au moyen d'un système de palier flottant (22), **caractérisée en ce que** dans la position fonctionnelle accouplée (44) du robot industriel (16) l'unité d'entraînement (20) n'agit pas par entraînement sur le dispositif de support (18) et le dispositif de support (18) est entraîné par la pièce à usiner mobile (12) et / ou par l'unité porte-pièce mobile (14) au moins de manière temporaire au moyen du système de palier flottant (22), le dispositif de support (18) présentant une unité de support en suspension (24) destiné à réduire le mouvement de frottement du robot industriel (16).

2. Système d'usinage selon la revendication 1, **caractérisé en ce que** l'unité de support en suspension (24) est réalisée en forme d'unité à coussin à air (26).

3. Système d'usinage selon l'une quelconque des revendications précédentes **caractérisé en ce que** l'unité d'entraînement (20) est réalisée sous la forme d'un système à roue de friction pouvant être activé qui comprend au moins une roue de friction reliée ou pouvant être reliée à un système de guidage (54) prévu pour le dispositif de support (18).

4. Système d'usinage selon l'une quelconque des revendications précédentes **caractérisé en ce que** le dispositif de support (18) présente une plateforme (30) avec laquelle le robot industriel (16) est relié fixement dans la position fonctionnelle désaccouplée (42) et de manière flottante dans une position fonctionnelle accouplée.

5. Système d'usinage selon la revendication 4, **caractérisé en ce que** le robot industriel (16) est relié à la plateforme (30) par interposition d'un système de compensation de hauteur (46) spécialement commutable.

6. Système d'usinage selon la revendication 4 ou 5, **caractérisé en ce que** la plateforme (30) est portée par l'unité de support en suspension (24) réduisant la force de déplacement.

7. Système d'usinage selon la revendication 4 à 6, **caractérisé en ce que** le robot industriel (16) est relié à la plateforme (30) de manière flottante dans la position fonctionnelle accouplée (44) au moyen d'un système de coussin à air (32).

8. Système d'usinage selon l'une quelconque des revendications précédentes **caractérisé en ce que** le robot industriel (16) présente une unité d'équilibrage de poids (34) laquelle peut être portée dans une position de compensation adéquate en fonction d'un mouvement du robot industriel (16) au moyen d'une unité de commande (36) du robot industriel (16) en particulier par un mouvement de déplacement.

9. Système d'usinage selon l'une quelconque des revendications précédentes **caractérisé en ce que** sont disposées sur le dispositif de support (18) et en particulier sur la plateforme (30) en outre une unité de commande (36) du robot industriel (16) et / ou au moins une unité de production (40).

10. Système d'usinage selon la revendication 9, **caractérisé en ce que** l'unité de production (40) est un autre robot industriel et / ou un porteur de charge et / ou une unité d'usinage.

11. Système d'usinage selon la revendication 9 ou 10, **caractérisé en ce que** l'unité de production (40) est réalisée sous la forme d'un module pouvant être remplacé et / ou évolutif.

12. Système d'usinage selon l'une quelconque des revendications précédentes, **caractérisé en ce que** le dispositif de support (18) et en particulier la plateforme (30) sont réalisés sous la forme de module pouvant être remplacé et / ou évolutif.

13. Système d'usinage selon l'une quelconque des revendications précédentes, **caractérisé en ce qu'**il comprend un dispositif d'accouplement (66) qui est relié au robot industriel (16) au moyen d'une unité de charge (72) flottante pouvant être activée.

14. Système d'usinage selon la revendication 13, **caractérisé en ce que** le dispositif d'accouplement (16) est relié au robot industriel (44) en position fixe dans la position fonctionnelle accouplée (44) et de manière flottante dans la position fonctionnelle désaccouplée (42).

15. Système d'usinage selon la revendication 13 ou 14, **caractérisé en ce que** l'unité d'accouplement (66) comprend un système d'assemblage (84) destiné à réaliser une liaison avec l'unité porte-pièce mobile (14) et un système de préhension (80) destiné à réaliser une liaison avec la pièce à usiner mobile (12).

16. Procédé pour positionner un robot industriel (16) pouvant être accouplé fixement et temporairement à la pièce à usiner mobile (12) et / ou à l'unité porte-pièce mobile (14) d'un système d'usinage (10) selon l'une quelconque des revendications précédentes, le système d'usinage (10) comprenant une unité de support (18) pouvant être déplacée indépendamment de la pièce à usiner au moyen d'une unité d'entraînement (20), laquelle porte le robot industriel (16) dans la position fonctionnelle désaccouplée (42), **caractérisé en ce que** l'unité de support (18) est entraînée au moins temporairement au moyen d'un système de palier flottant (22) dans une position fonctionnelle accouplée (44) du robot industriel (16) entraîné par la pièce à usiner déplacée, l'unité de support (18) pouvant se déplacer au moyen d'une unité de support en suspension (24) qui réduit la friction due au mouvement sur la surface inférieure (11).

17. Procédé selon la revendication 16, **caractérisé en ce que** le système de palier flottant (22) est un système à coussin d'air (32) et l'unité de support en suspension (24) est réalisée sous la forme d'une unité à coussin d'air (26).

18. Procédé selon la revendication 16 ou 17, **caractérisé en ce que** l'unité de support (18) peut se déplacer sur la surface inférieure (11) au moyen d'un système de guidage (38) dans la direction définie.

19. Procédé selon l'une quelconque des revendications 16 à 18, **caractérisé en ce que** le robot industriel (16) est relié de manière fixe à l'unité de support (18), ensuite l'unité de support (18) se déplace dans une position d'accouplement par rapport à la pièce à usiner (12), puis un dispositif d'accouplement (66) relié de manière flottante au robot industriel (16) est couplé à la pièce à usiner (12) et / ou à l'unité porte-pièce (14), puis le robot industriel (16) est relié de manière flottante à l'unité de support (18), ensuite le dispositif d'accouplement (66) accouplé est relié de manière fixe au robot industriel (16) et enfin l'unité de support (18) est entraîné lors d'un mouvement de la pièce à usiner au moyen du système de palier flottant (22) du robot industriel (16).

20. Procédé selon la revendication 19, **caractérisé en ce que** la pièce à usiner (12) se déplace au moment de l'accouplement du dispositif d'accouplement (66).
